# EUROPEAN PATENT SPECIFICATION

(11) **EP 3 638 857 B1**
(45) Date of publication and mention of the grant of the patent: **19.02.2025**
(21) Application number: 17729476.6
(22) Date of filing: 13.06.2017
(51) Int. Cl.: E02F 9/26

(54) **A WORKING MACHINE PROVIDED WITH AN IMAGE PROJECTION ARRANGEMENT**
MIT EINER BILDPROJEKTIONSANORDNUNG AUSGESTATTETE ARBEITSMASCHINE
ENGIN DE CHANTIER POURVU D'UN AGENCEMENT DE PROJECTION D'IMAGE

(43) Date of publication of application: 22.04.2020
(73) Proprietor: Volvo Construction Equipment AB, 631 85 Eskilstuna (SE)
(72) Inventor: FILLA, Reno, 633 52 Eskilstuna (SE); SKOGH, Lennart, 632 33 Eskilstuna (SE)
(74) Representative: Kransell & Wennborg KB
(86) International application number: PCT/EP2017/064374
(87) International publication number: WO 2018/228669

(56) References cited:
- EP-A1- 3 594 415
- JP-A- 2013 009 267
- JP-A- 2016 106 192
- KR-A- 20140 084 409
- US-A1- 2015 315 765
- US-A1- 2016 193 920
- US-A1- 2016 326 724

## Description

### TECHNICAL FIELD

The present disclosure generally relates to a working machine, wherein the working machine is provided with an image projection arrangement specifically adapted for projecting an image at a surface of an external component comprised with the working machine. The present disclosure also relates to a corresponding method and computer program for such a working machine.

### BACKGROUND

Working machines, in the form of e.g. excavators, dozers, loaders, and the like, may be used to perform various tasks in construction, mining and/or landscaping operations. Such working machines may generally be equipped with one or more work implements that can engage various objects to assist in performing the tasks. The work implements may be adjustable or manipulated in an intended manner by an operator, who e.g. may be positioned on-board the working machine. There exist various control systems and technologies to be incorporated into such working machines for assist its operator in controlling the working machine and/or work implements. These systems and technologies can interact with various a multitude of sensors for providing information and data to the operator regarding the working machine and/or work implements to further assist in control of the same.

Recent advances in computer science now allows the above mentioned control systems providing assistance to the operator to, in real-time, correlate data acquired by the sensors with a dynamic structural environment in which the working machine is operating. Based on the correlation, a so-called augmented reality (AR) may be displayed to the operator for assisting the operator in manipulating the working machine.

Specifically, AR may provide the operator with a view of a physical, real-world environment whose elements are augmented (or supplemented) by computer-generated sensory input such as sound, text, graphics, or video. In a typical prior-art AR application, a data processor reviews a camera-captured image for cues that trigger the display of additional information and images along with a display of the captured image.

The AR information may for example be presented to the operator using a display screen arranged within an operator compartment comprised with the working machine. However, such an implementation makes in necessary for the operator to split his attention between the display and e.g. the work implement, making the operation precarious and tiresome.

A more dynamic approach may as an alternative be taken, such as disclosed in US20140188333, where the operator is provided with a head mounted display (HMD) that is adapted for augmented reality capabilities. According to US20140188333, AR information may additionally be allowed to assist the operator to "see" the work implement even in cases where the work implement is obstructed from the direct view of the operator.

Even though the solution presented in US20140188333 provides great improvements to the safety operation of a working machine, the present inventors have identified further possibilities to assisting the operator, without having to resort to forcing the operator to wear e.g. a HMD, allowing further risk reductions when operating a working machine at e.g. a construction site or the like.

### SUMMARY

According to an aspect of the present disclosure, the above is at least partly alleviated by working machine, as defined in claim 1, comprising a working machine structure, working machine means pivotally connected to the working machine structure, and an operator compartment provided at the working machine structure and provided with control means adapted to allow an operator to control a position of the working machine means, wherein the working machine further comprises an image projection arrangement for projecting an image at a surface of the working machine means facing the operator compartment and the projected image comprises information for the operator to control the working machine.

In accordance to the present disclosure, it is thus possible to allow for any projection of information for assisting the operator to take place at an area externally of said working machine, i.e. without having to resort to presenting the information at a fixed or a mobile (e.g. HMD) display as proposed in accordance to prior-art. Rather, the working machine means comprised with the working machine is instead used as a "canvas" for presenting the assisting information.

An advantage following this implementation is that the operator of the working machine may be allowed to place his focus at the "right place", which typically will be outside of the operator compartment rather than within the operator compartment. In addition, the projected information may typically be projected where and when "needed" and without the need to provide the operator with e.g. a dedicated HDM or similar. In addition, the solution proposed by the present disclosure solves prior-art problems of focal depth, where the operator has to re-focus when switching his gaze between the working machine means and the display device arranged within the operator compartment.

The image projection arrangement should be understood to mean an arrangement or a device that is capable of providing a visible illumination, including for example markings, lines, symbols, icons, text, images, etc., at the surface of the working machine means facing the operator compartment. The image projection arrangement may as such comprise different type of light sources, such as e.g. light emitting diodes (LED), or an array of LEDs, etc. Other alternatives are of course conceivable, such as e.g. lasers, image/video projectors, etc. Using a laser projector may in some embodiments be preferred due to the possible to provide a high focused monochrome light beam for projecting the image at the surface of the working machine means, as compared to what is some implementations may be achieved using a less focused light beam from e.g. an image projector. It should however be understood that the use of an image projector may be suitable in some implementations of the present disclosure.

Furthermore, the working machine may for example be at least one of an excavator, a wheel loader, a dozer, a grader and a backhoe loader, or any form of corresponding construction equipment comprising suitable working machine means arranged externally and at the same time visible for the operator and suitable for allowing the image to be projected in a manner as discussed above. Correspondingly, the working machine means may of course depend in the type of working machine. For example, the working machine means may in some embodiments comprises at least one of an implement and linkage. The implement may for example be a bucket or similar.

The working machine may, in some embodiments, comprise an internal combustion engine, or be at least one of a pure electrical vehicle (PEV) and a hybrid electric vehicle (HEV). Furthermore, in some embodiments of the present disclosure it may be desirable to equip the working machine with a geolocation arrangement, such as for example a GLONASS or GPS receiver comprised with the working machine, for determining a present location of the working machine such as at a work or construction site. Information relating to the position of the working machine may also comprise information relating to a relative orientation of the working machine.

In the present invention the image projection arrangement further comprises a control unit adapted to adjust a position of the image projected at the surface of the working machine means based on an expected position of the user when the user is positioned at the operator compartment. The estimation is performed using an eye and/or head tracking mechanism connected to the control unit. With the estimated position available, it is possible to allow e.g. perspective views of the image to be correctly projected when seen from the operator's present position.

The control unit may in one embodiment be an electronic control unit (ECU) is typically provided as an onboard component of the working machine. Furthermore, the control unit is preferably adapted to receive information indicative of the current position of the working machine means (relative to e.g. the operator compartment or a ground surface), and to adapt the image projected at the working machine means based on the current position of the working machine means and/or the position of the operator.

The image projected at the surface of the working machine means may comprise information of a current or future task to be performed by the operator of the working machine, such as for example how to control the working machine means at e.g. the present location of the working machine. Such information may for example comprise a specific task using the implement for the excavator, such as digging a hole in ground at a specific location. Thus, the image formed and projected may include information for the operator of where the digging is to take place ("digging instructions"). The digging instruction, or similar, may also comprise a warning to the operator as to e.g. tubes and or pipes arranged underground. Thus, with such information at hand in may be possible to reduce possible digging accidents. The information may also be used informing the operator of e.g. at least one of a desired and a maximum filling level of the bucket.

It should however be understood that the information provided to the operator also, or instead, may include e.g. driving instructions to the operator for maneuvering the working machine. Alternatively, the information may be adapted to provide the operator with feedback on operation of the working machine, such as for example for operating the working machine in a more fuel-efficient manner, etc.

In addition to the above, the control unit may be further adapted to receive geographical data relating to a surrounding of the working machine. Such geographical data may possibly be acquired using one or a plurality of sensors arranged at or in the vicinity of the working machine. Such a sensor or sensors may for example include at least one of camera, a laser scanner, a radar arrangement, an IR based arrangement and a Lidar arrangement. The geographical data may provide information relating to e.g. how the ground surface is arranged, relate to possible structures or obstacles in the surrounding of the working machine, etc. The geographical data may, in one embodiment, be included when forming the image to be projected at the surface of the working machine means.

According to another aspect of the present disclosure there is provided a method for assisting an operator of a working machine, wherein the working machine comprises a working machine structure, working machine means pivotally connected to the working machine structure, an operator compartment provided at the working machine structure and provided with control means adapted to allow the operator to control a position of the working machine means, an image projection arrangement for projecting an image, and a control unit for controlling the image projection arrangement, wherein the method comprises the steps of determining, using the control unit, a position of the working machine means, and projecting the image at a surface of the working machine means facing the operator compartment based on the determined position of the working machine means. This aspect of the present disclosure provides similar advantages as discussed above in relation to the previous aspect of the present disclosure.

Further advantages and advantageous features of the present disclosure are disclosed in the following description and in the dependent claims.

### BRIEF DESCRIPTION OF THE DRAWINGS

With reference to the appended drawings, below follows a more detailed description of embodiments of the present disclosure cited as examples.

In the drawings:
Fig. 1 is a perspective view of a working machine in the form of an excavator provided with an image projection arrangement according to the present disclosure;
Fig. 2 conceptually shows the image projection arrangement according to an example embodiment of the present disclosure;
Figs. 3A - 3D are conceptual illustrations of possible formed images projected onto a surface of working machine means facing the operator compartment, and
Fig. 4 illustrates the processing steps for performing the method according to the present disclosure.

### DETAILED DESCRIPTION

The present disclosure will now be described more fully hereinafter with reference to the accompanying drawings, in which currently preferred embodiments of the present disclosure are shown. This disclosure may, however, be embodied in many different forms within the scope as defined in the appended claims.

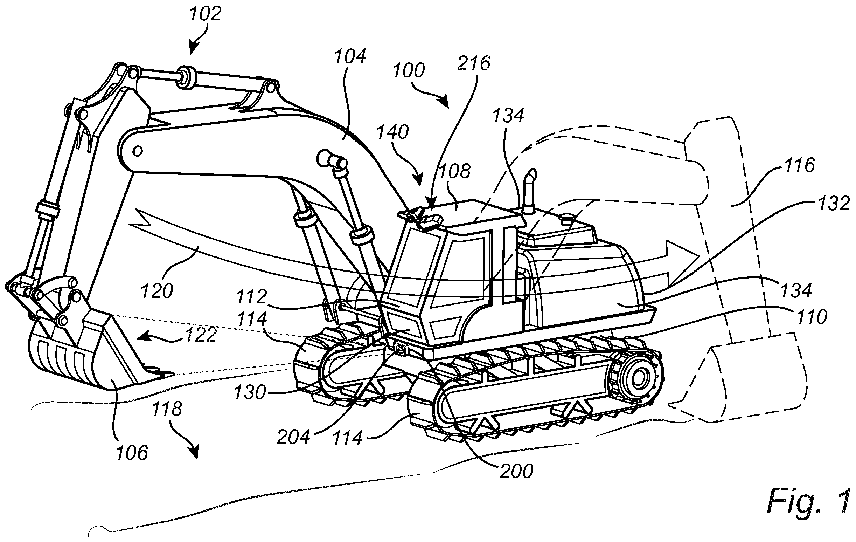

With particular reference to Fig. 1, there is provided a working machine 100 in the form of an excavator 100. The excavator 100 comprises movable load unit arrangement 102, which movable load unit arrangement 102 comprises a working machine means, exemplified as boom arm 104 and an implement 106. In the embodiment depicted in Fig. 1, the implement 106 is a bucket, although other implements are conceivable as well, such as e.g. a gripping tool, etc. The excavator 100 comprises a working machine structure including an upper structure 108 and a lower structure 110, wherein the upper 108 and lower 110 structures are movable relative to each other. In detail, the upper structure 108 can rotate relative the lower structure 110 around a substantially vertical geometric axis (not shown).

The load unit arrangement 102 is connected to the upper structure 108 of the excavator 100, which makes it rotatably movable relative to the lower structure 110 as well as relative to the ground surface 118 thereof. The load unit arrangement 102 can also be lifted and lowered relative to the ground surface 118 such that the distance between the implement 106 and the ground surface 118 increases/reduces. In addition, the implement 106 can be tilted relative to the boom arm 104. As further illustrated in Fig. 1, the upper structure 108 comprises a compartment 112 for housing an operator of the excavator 100, while the lower structure 110 comprises a pair of ground engaging members 114 in the form of caterpillar treads 114. Other ground engaging members 114 are also conceivable, such as e.g. wheels, etc.

As described, the load unit arrangement 102 is movable relative to the lower structure 110, as well as relative to the ground surface 118. Fig. 1 depicts the movement from a first, present point in time at which the load unit arrangement 102 is depicted with solid lines, to a future point in time. The load unit arrangement 102 is depicted with dashed lines 116 at the future point in time. The movement from the present position to the future position is depicted by arrow 120.

The working machine 100 further comprises image projection arrangement 200. A detailed description of the image projection arrangement 200 and its implementation and operation in relation to the working machine is given in relation to the description below.

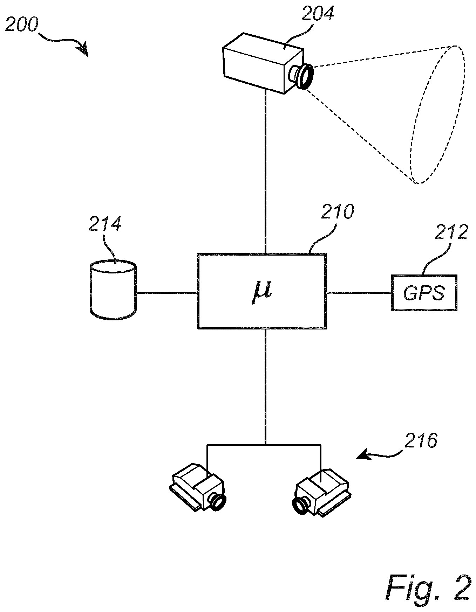

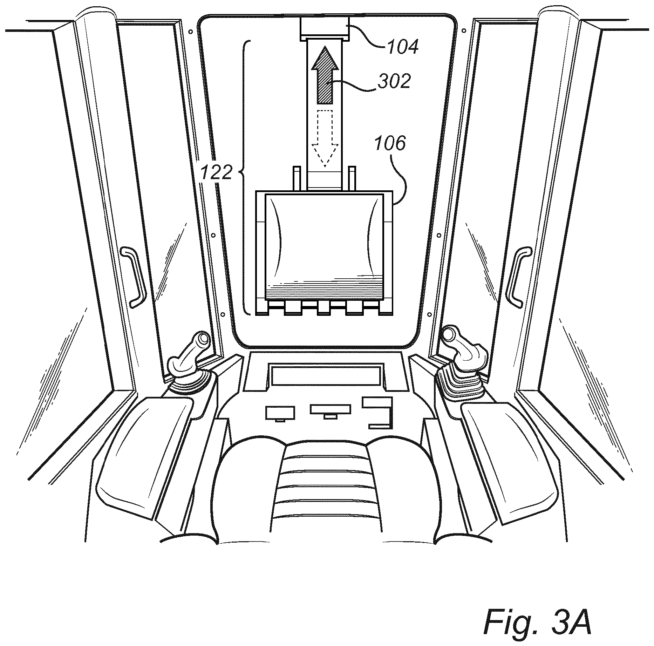

Turning now to Fig 2, there is conceptually shown a possible implementation of the image projection arrangement 200. As exemplified, the image projection arrangement 200 is arranged to project an image onto a surface 122 externally of said working machine 100 e.g. at the boom arm 104 and an implement 106. Further details of various image projection at the working machine means, such as the boom arm 104 and an implement 106 are given below in relation to the description of Figs. 3A - 3D.

The image projection arrangement 200 can as discussed above comprise e.g. a laser projector 204 for presenting information at the surface 122. The image projection arrangement 200 further comprises a control unit 210, such as an electronic control unit (ECU), adapted to form the image to be projected by the laser projector 204. The control unit 210 is further adapted to control the laser projector 204. The control unit 210 may for example be manifested as a general-purpose processor, an application specific processor, a circuit containing processing components, a group of distributed processing components, a group of distributed computers configured for processing, a field programmable gate array (FPGA), etc.

The processor may be or include any number of hardware components for conducting data or signal processing or for executing computer code stored in memory. The memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

The control unit 210 is further adapted to receive information indicative of a present location of the working machine 100, such as from a geolocation arrangement 212 comprised with the working machine 100. The geolocation arrangement 212 may for example comprise a GPS receiver 212 or a local positioning arrangement at a construction site, such as for example a Wi-Fi positioning system. It may, as understood by the skilled addressee, be necessary to use an alternative to satellite navigation in case the working machine is operating underground, such as for example in a mine or similar.

In addition, the control unit 210 may be adapted to receive information relating to an orientation of the working machine 100, relative to e.g. the work site, thus allowing the working machine 100 both positioned and oriented in a desired manner. Such orientation information may for example be provided by the GPS receiver 212 or using a separate compass functionality provided with the working machine 100. In the exemplary implementation shown in Fig. 2, the control unit 210 is further adapted to receive construction data that has been previously stored in a database 214 arranged in communication with the control unit 210.

The image projection arrangement 200 may further comprise a database 214 arranged onboard the working machine 100 or remotely from the working machine 100. The database 214 is arranged in communication with the control unit 210. In case the database 214 is arranged remotely from the working machine 100 the image projection arrangement 200 may comprise a transceiver (not shown) used for establishing a network connection with the database 214. The database 214 may for example comprise digging instructions, driving instructions or similar relating to a specific location (e.g. working site) where the working machine 100 is to be operated.

In addition to the above, the control unit 210 is preferably adapted to receive sensor data relating a surrounding of the working machine 100, such as from a camera arrangement 216. The camera arrangement 216 may, in some embodiments, be a three-dimensional (3D) camera adapted to be used for forming a 3D representation of the surrounding of the working machine 100. Accordingly, the control unit 210 is adapted to implement a feedback functionality where e.g. sensor data may be correlated with e.g. the digging instructions, driving instructions or similar stored within the database 214. Thus, it may be possible to determine a matching between a current state at e.g. the work/construction site (i.e. collected using the camera arrangement 216) and the "desired" end result provided by the construction data. The correlation will further allow the projected image to be updated in a corresponding manner, i.e. to be continuously dependent on the current status of the work/construction site and the operation of the working machine means performed by the operator. The control unit 210 may also be adapted to be connected to navigation equipment (not shown) comprised with the working machine 100 for providing navigation instructions to the control unit 210 as will be further discussed below.

The control unit 210 may additionally be adapted to (continuously) receive information relating to a current positioning of the working machine means. Such information may for example be available at a CAN bus comprised with the working machine 100 or alternatively received from further sensors (not shown) arranged at the working machine means.

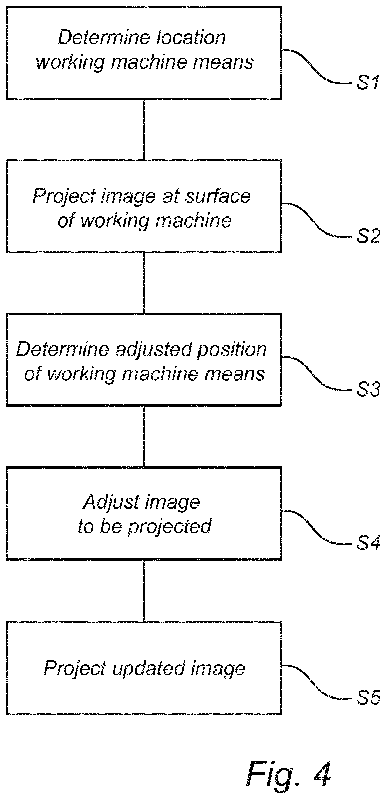

With further reference to Figs. 3A - 3D in conjunction with Fig. 4, there is provided four examples of assisting the operator of the working machine 100 using the image projection arrangement 200.

In Fig. 3A the operator is provided with a basic instruction at the above discussed surface 122 externally of said working machine 100 at e.g. the boom arm 104 and the implement 106. In Figs. 3A - 3D, the surface 122 is defined to include a surface pointing towards the operator compartment 112 of at least one of boom arm 104 and the implement 106.

The instruction to be provided to the operator in accordance to Fig. 3A is provided for controlling a position of the implement 106 in relation to the ground surface 118. This is according to the presented embodiment achieved by determining, S1, a location (or position) of the implement 106, e.g. using data received from the CAN bus or using the camera arrangement 216. Based on the location/position of the implement 106, the control unit 210 forms, possibly based on e.g. the digging instruction received from the database 214, an image 302 to be projected, S2, at the surface 122. In the illustration provided in Fig. 3A, the image is projected at the boom arm 104.

As a result of the projected image 302, showing an arrow pointing upward, the operator is to adjust the position/location of the implement 106 such that the implement 106 is raised, and the control unit will 210 will as a consequence determine, S3, an adjusted position of the implement 106. In case the implement 106 has been "raised more" than what was desired (e.g. raised "too much"), an adjusted, S4, image 304 may be formed and subsequently projected, S5, at the surface 122. In Fig. 3A, the adjusted image 304 is provided as an arrow pointing downward.

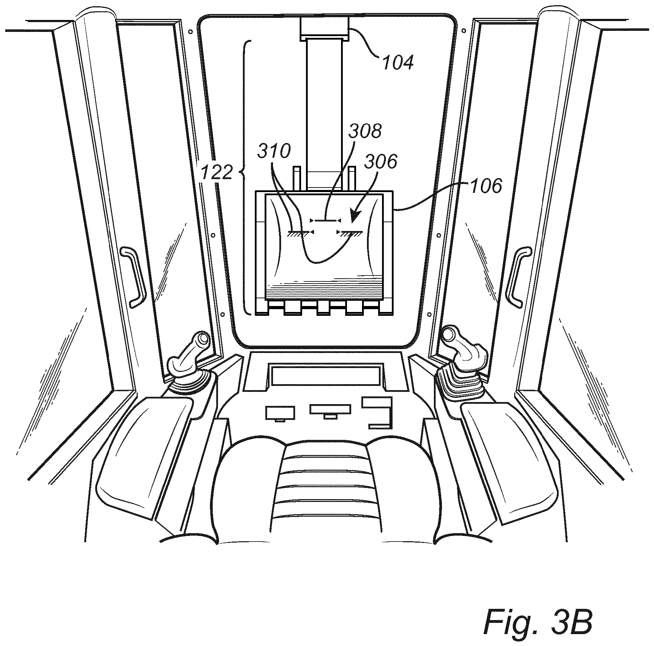

As an alternative and as shown in Fig. 3B, an alternative image 306 may be provided for positioning of the implement 106. Such an image 306 may for example comprise lines/markings easily understandable for the operator. In Fig. 3B, the idea is for the operator to level a centerline 308 and the same height as two outer lines 310 provided adjacently to the centerline 308, for arranging the implement 106 at e.g. a specific height in relation to the ground surface 108. The illustration provided in Fig. 3B will consequently be dynamically updated based on continuous operation of the implement 106. Thus, the current position/location of the implement 106 will be monitored and compared to a desired location/position of the implement 106, such as for example provided with mentioned the digging instructions. The implementation shown in Fig. 3B will thus be somewhat analogue by showing a continuous adjustment of the centerline 308, whereas the implementation shown in Fig. 3A will be somewhat "digital" switching between the upward 302 and downward 304 pointing arrow based on a threshold comparison.

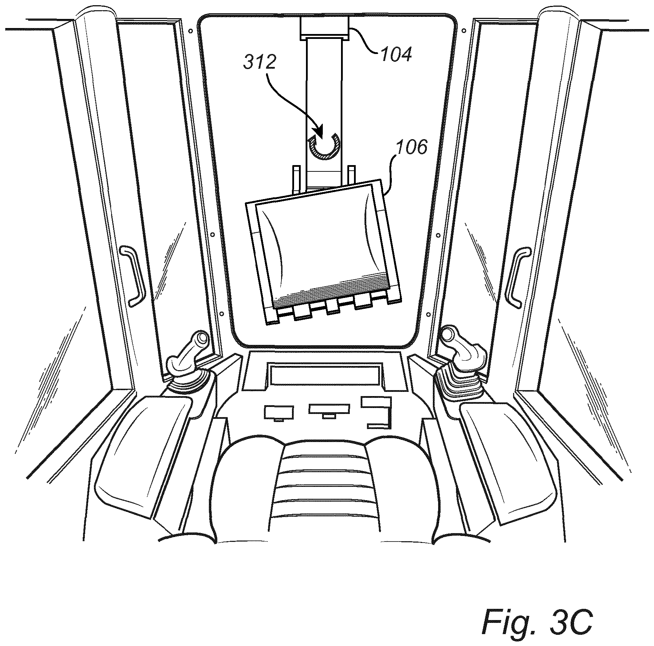

In Fig. 3C there is provided a still further example of providing the operator with an instruction for operating the implement 106. Specifically, in Fig. 3C there is a desire to keep the implement "leveled". A determination is made as to the present location/position of the implement 106 and it is indicated that the implement is slightly rotated. As a result, a rotational image 312 is presented to the operator at the surface 122, as exemplified at the boom arm 104. Once the operator has leveled the implement 106 an updated image (not shown) may be provided to inform the operator that the implement 106 now is leveled.

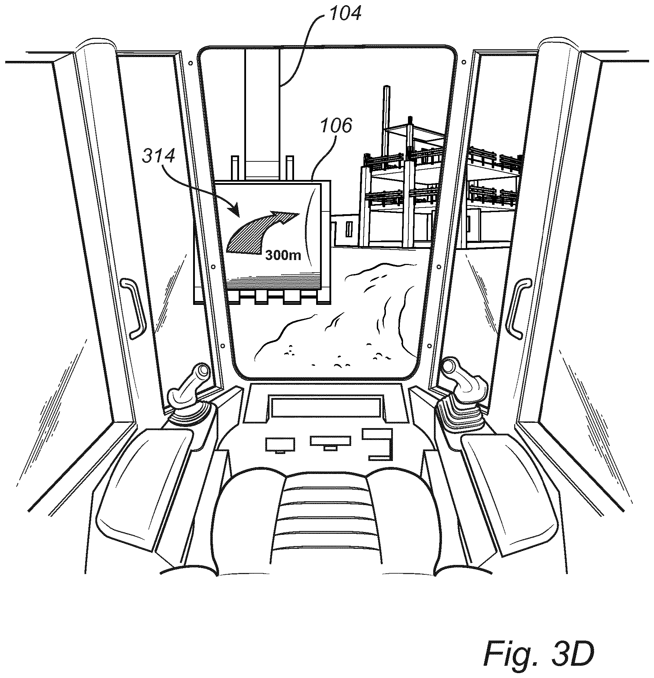

Furthermore and as indicated above, the image projected at the surface 122 may not necessarily be limited to show information relating to e.g. a specific handling of the implement 106. Rather, other types of information may be provided. As exemplified in Fig. 3D, an image 314 may be projected at the surface 122 (exemplified as at the implement 106) for providing the operator with a driving instruction when moving the working machine 100 around e.g. a work site. The driving instruction may for example be based on the present location of the working machine 100 and a provided task to move the working machine 100 from a current to a future location at the work site, for example received from a supervisor at the work site. Again, the position/location of the implement 106 is determined, in Fig. 3D shown as slightly moved to the side to give the operator a proper line of sight when moving the working machine 100. In Fig. 3D, the image 314 is instructing the operator to turn to the right within 300 meters from the present location of the working machine 100.

As indicated above, the image projected at the surface 122 may of course hold other information, such as a current weight of the implement 106 (when loaded), an instruction to operate the working machine 100 in a more energy efficient manner, etc. Accordingly, any type of suitable information that may be useful for operating the working machine 100 in an efficient manner may be provided to the operator at the surface 122.

## Claims

1. A working machine (100), comprising:
- a working machine structure (108),
- working machine means (104, 106) pivotally connected to the working machine structure (108), and
- an operator compartment (122) provided at the working machine structure (108) and provided with control means adapted to allow an operator to control a position of the working machine means (104, 106),
wherein the working machine (100) further comprises:
- an image projection arrangement (200) for projecting an image (302, 304, 306, 312, 314) at a surface (122) of the working machine means (104, 106) facing the operator compartment (122), wherein the projected image (302, 304, 306, 312, 314) comprises information for the operator to control the working machine (100),
**characterized in that** the image projection arrangement (200) further comprises a control unit (210) adapted to adjust a position of the image projected at the surface of the working machine means (104, 106) based on an expected position of the operator within the operator compartment (122) and a current position of the working machine means (104, 106) outside the operator compartment, wherein the expected position of the operator is determined using an eye and/or head tracking mechanism connected to the control unit.

2. The working machine (100) according to claim 1, wherein the image projection arrangement (200) comprises a laser projector (204).

3. The working machine (100) according to claim 1, wherein the control unit (210) is adapted to receive information indicative of the current position of the working machine means (104, 106).

4. The working machine (100) according to any one of the preceding claims, wherein the control unit (210) is further adapted to receive information indicative of a head position of the operator and to control the position of the image (302, 304, 306, 312, 314) projected at the surface (122) of the working machine means (104, 106) based on the head position.

5. The working machine (100) according to any one of the preceding claims, wherein the working machine means (104, 106) comprises at least one of an implement (106) and linkage (104).

6. The working machine (100) according to any one of claims 1 - 4, wherein the working machine means (104, 106) comprises a bucket.

7. The working machine (100) according to any one of the preceding claims, wherein the working machine (100) is at least one of an excavator (100), a wheel loader, a dozer, a grader and a backhoe loader.

8. The working machine (100) according to any one of the preceding claims, wherein the projected image (302, 304, 306, 312, 314):
- comprises information for the operator to control the working machine means (104, 106),
- comprises information for positioning of the working machine means (104, 106),
- comprises information for the operator of a parameter relating to the operation of the working machine (100),
- comprises information relating to at least one of a desired and a maximum filling level of the bucket, or
- is adapted based on operator repositioning of the working machine means (104, 106).

9. The working machine (100) according to any one of the preceding claims, wherein the projected image (302, 304, 306, 312, 314) comprises at least one of lines and symbols.

10. A method for assisting an operator of a working machine, wherein the working machine (100) comprises:
- a working machine structure (108),
- working machine means (104, 106) pivotally connected to the working machine structure (108),
- an operator compartment (112) provided at the working machine structure (108) and provided with control means adapted to allow the operator to control a position of the working machine means (104, 106),
- an image projection arrangement (200) for projecting an image (302, 304, 306, 312, 314), and
- a control unit (210) for controlling the image projection arrangement (200),
wherein the method comprises the steps of:
- determining, using the control unit (210), a position of the working machine means (104, 106), and
- projecting the image (302, 304, 306, 312, 314) at a surface (122) of the working machine means (104, 106) facing the operator compartment (112) based on the determined position of the working machine means (104, 106),
**characterized in that** the method further comprises the step of:
- adjusting, using the control unit (210) a position of the image projected at the surface of the working machine means (104, 106) based on an expected position of the operator within the operator compartment (122) and a current position of the working machine means (104, 106) outside the operator compartment, wherein the expected position of the operator is determined using an eye and/or head tracking mechanism connected to the control unit.

11. The method according to claim 10, further comprising the step of:
- determining a head location of the operator,
wherein the step of adjusting the position of the image (302, 304, 306, 312, 314) projected at the surface (122) of the working machine means (104, 106) is based on the head position of the operator.

12. The method according to any one of claims 10 and 11, further comprising the step of:
- adjusting information comprised with the projected image (302, 304, 306, 312, 314) for instructing the operator to repositioning the working machine means (104, 106).

13. The method according to any one of claims 10 - 12, wherein the image (302, 304, 306, 312, 314) is selected to comprise at least one of lines and symbols.

14. The method according to claim 10, wherein the working machine means (104, 106) comprises a bucket and the method further comprises the step of:
- selecting the projected image (302, 304, 306, 312, 314) to comprises information relating to at least one of a desired and a maximum filling level of the bucket.

## Patentansprüche

1. Arbeitsmaschine (100) umfassend:
- eine Arbeitsmaschinenstruktur (108),
- Arbeitsmaschinenmittel (104, 106), das schwenkbar mit der Arbeitsmaschinenstruktur (108) verbunden ist, und
- ein Bedienerabteil (122), das an der Arbeitsmaschinenstruktur (108) vorgesehen ist und mit Steuermitteln versehen ist, die es einem Bediener ermöglichen, eine Position des Arbeitsmaschinenmittels (104, 106) zu steuern,
wobei die Arbeitsmaschine (100) ferner umfasst:
- eine Bildprojektionsanordnung (200) zum Projizieren eines Bildes (302, 304, 306, 312, 314) auf eine Oberfläche (122) des Arbeitsmaschinenmittels (104, 106), die dem Bedienerabteil (122) zugewandt ist, wobei das projizierte Bild (302, 304, 306, 312, 314) Informationen für den Bediener zur Steuerung der Arbeitsmaschine (100) umfasst,
**dadurch gekennzeichnet, dass** die Bildprojektionsanordnung (200) ferner eine Steuereinheit (210) umfasst, die angepasst ist, um eine Position des auf die Oberfläche des Arbeitsmaschinenmittels (104, 106) projizierten Bildes auf der Grundlage einer erwarteten Position des Bedieners innerhalb des Bedienerabteils (122) und einer aktuellen Position des Arbeitsmaschinenmittels (104, 106) außerhalb des Bedienerabteils einzustellen, wobei die erwartete Position des Bedieners unter Verwendung eines mit der Steuereinheit verbundenen Augen- und/oder Kopfverfolgungsmechanismus bestimmt wird.

2. Arbeitsmaschine (100) nach Anspruch 1, wobei die Bildprojektionsanordnung (200) einen Laserprojektor (204) umfasst.

3. Arbeitsmaschine (100) nach Anspruch 1, wobei die Steuereinheit (210) angepasst ist, um Informationen zu empfangen, die die aktuelle Position des Arbeitsmaschinenmittels (104, 106) anzeigen.

4. Arbeitsmaschine (100) nach einem der vorhergehenden Ansprüche, wobei die Steuereinheit (210) ferner angepasst ist, um Informationen zu empfangen, die eine Kopfposition des Bedieners anzeigen, und die Position des auf die Oberfläche (122) des Arbeitsmaschinenmittels (104, 106) projizierten Bildes (302, 304, 306, 312, 314) auf der Grundlage der Kopfposition zu steuern.

5. Arbeitsmaschine (100) nach einem der vorhergehenden Ansprüche, wobei das Arbeitsmaschinenmittel (104, 106) mindestens ein Arbeitsgerät (106) und/oder ein Gestänge (104) umfasst.

6. Arbeitsmaschine (100) nach einem der Ansprüche 1-4, wobei das Arbeitsmaschinenmittel (104, 106) eine Schaufel umfasst.

7. Arbeitsmaschine (100) nach einem der vorhergehenden Ansprüche, wobei die Arbeitsmaschine (100) mindestens ein Bagger (100), ein Radlader, ein Bulldozer, eine Planierraupe und/oder ein Baggerlader ist.

8. Arbeitsmaschine (100) nach einem der vorhergehenden Ansprüche, wobei das projizierte Bild (302, 304, 306, 312, 314):
- Informationen für den Bediener zur Steuerung des Arbeitsmaschinenmittels (104, 106) umfasst,
- Informationen zur Positionierung des Arbeitsmaschinenmittels (104, 106) umfasst,
- Informationen für den Bediener über einen Parameter, der sich auf den Betrieb der Arbeitsmaschine (100) bezieht, umfasst
- Informationen über einen gewünschten und/oder einen maximalen Füllstand der Schaufel umfasst, oder
- auf der Grundlage der Neupositionierung des Arbeitsmaschinenmittels (104, 106) durch den Bediener angepasst wird.

9. Arbeitsmaschine (100) nach einem der vorhergehenden Ansprüche, wobei das projizierte Bild (302, 304, 306, 312, 314) mindestens Linien und/oder Symbole umfasst.

10. Verfahren zum Unterstützen eines Bedieners einer Arbeitsmaschine, wobei die Arbeitsmaschine (100) umfasst:
- eine Arbeitsmaschinenstruktur (108),
- Arbeitsmaschinenmittel (104, 106), die schwenkbar mit der Arbeitsmaschinenstruktur (108) verbunden sind,
- ein Bedienerabteil (112), das an der Arbeitsmaschinenstruktur (108) vorgesehen ist und mit Steuermitteln versehen ist, die es dem Bediener ermöglichen, eine Position des Arbeitsmaschinenmittels (104, 106) zu steuern,
- eine Bildprojektionsanordnung (200) zum Projizieren eines Bildes (302, 304, 306, 312, 314), und
- eine Steuereinheit (210) zum Steuern der Bildprojektionsanordnung (200), wobei das Verfahren die folgenden Schritte umfasst:
- Bestimmen, unter Verwendung der Steuereinheit (210), einer Position des Arbeitsmaschinenmittels (104, 106), und
- Projizieren des Bildes (302, 304, 306, 312, 314) auf eine Oberfläche (122) des Arbeitsmaschinenmittels (104, 106), die dem Bedienerabteil (112) zugewandt ist, basierend auf der bestimmten Position des Arbeitsmaschinenmittels (104, 106),
**dadurch gekennzeichnet, dass** das Verfahren ferner die folgenden Schritte umfasst:
- Einstellen, unter Verwendung der Steuereinheit (210), einer Position des auf die Oberfläche des Arbeitsmaschinenmittels (104, 106) projizierten Bildes auf der Grundlage einer erwarteten Position des Bedieners innerhalb des Bedienerabteils (122) und einer aktuellen Position des Arbeitsmaschinenmittels (104, 106) außerhalb des Bedienerabteils, wobei die erwartete Position des Bedieners unter Verwendung eines mit der Steuereinheit verbundenen Augen- und/oder Kopfverfolgungsmechanismus bestimmt wird.

11. Verfahren nach Anspruch 10, das ferner folgenden Schritt umfasst:
- Bestimmen einer Kopfposition des Bedieners,
wobei der Schritt des Einstellens der Position des auf die Oberfläche (122) des Arbeitsmaschinenmittels (104, 106) projizierten Bildes (302, 304, 306, 312, 314) auf der Kopfposition des Bedieners basiert.

12. Verfahren nach einem der Ansprüche 10 und 11, das ferner folgenden Schritt umfasst:
- Einstellen von Informationen, die in dem projizierten Bild (302, 304, 306, 312, 314) enthalten sind, um den Bediener anzuweisen, das Arbeitsmaschinenmittel (104, 106) neu zu positionieren.

13. Verfahren nach einem der Ansprüche 10-12, wobei das Bild (302, 304, 306, 312, 314) so ausgewählt wird, dass es mindestens Linien und/oder Symbole umfasst.

14. Verfahren nach Anspruch 10, wobei das Arbeitsmaschinenmittel (104, 106) eine Schaufel umfasst und das Verfahren ferner den folgenden Schritt umfasst:
- Auswählen des projizierten Bildes (302, 304, 306, 312, 314), das Informationen über einen gewünschten und/oder einen maximalen Füllstand der Schaufel zu umfasst.

## Revendications

1. Engin de chantier (100), comprenant :
- une structure d'engin de chantier (108),
- des moyens d'engin de chantier (104, 106) reliés manière à pouvoir pivoter à la structure d'engin de chantier (108), et
- un poste de conduite (122) prévu au niveau de la structure (108) de l'engin de chantier et pourvu de moyens de commande adaptés pour permettre à un opérateur de commander une position des moyens (104, 106) de l'engin de chantier,
l'engin de chantier (100) comprenant en outre :
- un agencement de projection d'image (200) pour projeter une image (302, 304, 306, 312, 314) sur une surface (122) des moyens d'engin de chantier (104, 106) faisant face au poste de conduite (122), l'image projetée (302, 304, 306, 312, 314) comprenant des informations permettant à l'opérateur de commander l'engin de chantier (100),
**caractérisé en ce que** l'agencement de projection d'image (200) comprend en outre une unité de commande (210) adaptée pour ajuster une position de l'image projetée à la surface des moyens d'engin de chantier (104, 106) sur la base d'une position attendue de l'opérateur dans le poste de conduite (122) et d'une position actuelle des moyens d'engin de chantier (104, 106) à l'extérieur du poste de conduite, la position attendue de l'opérateur étant déterminée à l'aide d'un mécanisme de poursuite de l'œil et/ou de la tête relié à l'unité de commande.

2. Engin de chantier (100) selon la revendication 1, dans lequel l'agencement de projection d'image (200) comprend un projecteur laser (204).

3. Engin de chantier (100) selon la revendication 1, dans lequel l'unité de commande (210) est adaptée pour recevoir des informations indicatives de la position actuelle des moyens d'engin de chantier (104, 106).

4. Engin de chantier (100) selon l'une quelconque des revendications précédentes, dans lequel l'unité de commande (210) est en outre adaptée pour recevoir des informations indicatives d'une position de la tête de l'opérateur et pour commander la position de l'image (302, 304, 306, 306, 312, 314) projetée à la surface (122) des moyens d'engin de chantier (104, 106) sur la base de la position de tête.

5. Engin de chantier (100) selon l'une quelconque des revendications précédentes, dans lequel le moyen d'engin de chantier (104, 106) comprend au moins un outil (106) et une tringlerie (104).

6. Engin de chantier (100) selon l'une quelconque des revendications 1 à 4, dans lequel le moyen d'engin de chantier (104, 106) comprend un godet.

7. Engin de chantier (100) selon l'une quelconque des revendications précédentes, dans lequel l'engin de chantier (100) est au moins l'un parmi une excavatrice (100), une chargeuse sur pneus, un bouteur, une niveleuse et une chargeuse-pelleteuse.

8. Engin de chantier (100) selon l'une quelconque des revendications précédentes, dans lequel l'image projetée (302, 304, 306, 312, 314) :
- comprend des informations permettant à l'opérateur de commander les moyens d'engin de chantier (104, 106),
- comprend des informations pour le positionnement des moyens d'engin de chantier (104, 106),
- comprend des informations destinées à l'opérateur sur un paramètre relatif au fonctionnement de l'engin de chantier (100),
- comprend des informations relatives à au moins un niveau de remplissage souhaité et un niveau de remplissage maximal du godet, ou
- est adapté en fonction du repositionnement par l'opérateur des moyens d'engin de chantier (104, 106).

9. Engin de chantier (100) selon l'une quelconque des revendications précédentes, dans lequel l'image projetée (302, 304, 306, 312, 314) comprend au moins l'une parmi des lignes et des icônes.

10. Procédé d'assistance à un opérateur d'un engin de chantier, l'engin de chantier (100) comprenant :
- une structure d'engin de chantier (108),
- des moyens d'engin de chantier (104, 106) reliés manière à pouvoir pivoter à la structure d'engin de chantier (108),
- un poste de conduite (112) prévu au niveau de la structure de l'engin de chantier (108) et pourvu de moyens de commande adaptés pour permettre à l'opérateur de commander une position des moyens d'engin de chantier (104, 106),
- un agencement de projection d'image (200) pour projeter une image (302, 304, 306, 312, 314), et
- une unité de commande (210) pour commander l'agencement de projection d'image (200),
le procédé comprenant les étapes suivantes :
- détermination, à l'aide de l'unité de commande (210), d'une position des moyens d'engin de chantier (104, 106), et
- projection de l'image (302, 304, 306, 312, 314) sur une surface (122) des moyens d'engin de chantier (104, 106) faisant face au poste de conduite (112) sur la base de la position déterminée des moyens d'engin de chantier (104, 106),
**caractérisé en ce que** le procédé comprend en outre l'étape consistant à :
- régler, à l'aide de l'unité de commande (210), une position de l'image projetée à la surface des moyens d'engin de chantier (104, 106) sur la base d'une position attendue de l'opérateur dans le poste de commande (122) et d'une position actuelle des moyens d'engin de chantier (104, 106) à l'extérieur du poste de commande, la position attendue de l'opérateur étant déterminée à l'aide d'un mécanisme de poursuite de l'œil et/ou de la tête relié à l'unité de commande.

11. Procédé selon la revendication 10, comprenant en outre l'étape consistant à :
- déterminer l'emplacement de la tête de l'opérateur,
l'étape de réglage de la position de l'image (302, 304, 306, 312, 314) projetée à la surface (122) des moyens d'engin de chantier (104, 106) étant basée sur la position de la tête de l'opérateur.

12. Procédé selon l'une quelconque des revendications 10 et 11, comprenant en outre l'étape consistant à :
- paramétrer des informations comprises dans l'image projetée (302, 304, 306, 312, 314) pour donner à l'opérateur l'instruction de repositionner les moyens d'engin de chantier (104, 106).

13. Procédé selon l'une quelconque des revendications 10 à 12, dans lequel l'image (302, 304, 306, 312, 314) est sélectionnée de manière à ce qu'elle comprenne au moins l'un l'une parmi des lignes et des icônes.

14. Procédé selon la revendication 10, dans lequel les moyens d'engin de chantier (104, 106) comprennent un godet et le procédé comprend en outre l'étape consistant à :
- sélectionner l'image projetée (302, 304, 306, 312, 314) pour qu'elle contienne des informations relatives à au moins un parmi un niveau de remplissage souhaité ou maximal du godet.
